Europäisches Patentamt

European Patent Office

Office européen des brevets

(11) Publication number: **0 251 036 B1**

# EUROPEAN PATENT SPECIFICATION

(45) Date of publication of patent specification: **08.05.91**   (51) Int. Cl.⁵: **B41J  2/32**

(21) Application number: **87108707.8**

(22) Date of filing: **16.06.87**

(54) **Thermal head.**

(30) Priority: **25.06.86 JP 147145/86**
       **27.08.86 JP 198914/86**

(43) Date of publication of application:
       **07.01.88 Bulletin  88/01**

(45) Publication of the grant of the patent:
       **08.05.91 Bulletin  91/19**

(84) Designated Contracting States:
       **DE FR GB**

(56) References cited:
       **EP-A- 0 177 193**
       **DE-A- 3 435 407**
       **DE-A- 3 447 581**

(73) Proprietor: **KABUSHIKI KAISHA TOSHIBA**
       **72, Horikawa-cho Saiwai-ku**
       **Kawasaki-shi Kanagawa-ken 210(JP)**

(72) Inventor: **Nikaido, Masaru Patent Division**
       **Kabushiki Kaisha Toshiba 1-1, Shibaura**
       **1-chome**
       **Minato-ku Tokyo 105(JP)**
       Inventor: **Ouchi, Yoshiaki Patent Division**
       **Kabushiki Kaisha Toshiba 1-1, Shibaura**
       **1-chome**
       **Minato-ku Tokyo 105(JP)**

Inventor: **Kinoshita, Tadayoshi Patent Division**
**Kabushiki Kaisha Toshiba 1-1, Shibaura**
**1-chome**
**Minato-ku Tokyo 105(JP)**
Inventor: **Watanabe, Reiko Patent Division**
**Kabushiki Kaisha Toshiba 1-1, Shibaura**
**1-chome**
**Minato-ku Tokyo 105(JP)**
Inventor: **Sugai, Shinzo Patent Division**
**Kabushiki Kaisha Toshiba 1-1, Shibaura**
**1-chome**
**Minato-ku Tokyo 105(JP)**

(74) Representative: **Henkel, Feiler, Hänzel & Part-**
       **ner**
       **Möhlstrasse 37**
       **W-8000 München 80(DE)**

## Description

The present invention relates to a thermal head, and more particularly, to a substrate structure of a thermal head.

Thermal heads are conventionally used in recording devices such as facsimiles, printers, and word processors. In general, the thermal heads are fabricated as follows. First, a heat insulating glaze layer, composed mainly of silicon oxide, barium oxide, calcium oxide, and boron oxide, is formed on a high electrical resistance substrate, made of aluminium oxide, as an alkali-free ceramic material of at least 90% purity. Then, heating resistors, made of $Ta-SiO_2$, $Ta_2N$, NiCr, etc. are formed in a specific pattern on the heat insulating layer. Further, conductor patterns of aluminium or gold, for use as individual electrodes and a common electrode, are formed on the heating resistors. Also, the resistors are formed at least with an oxidation protective layer made of $SiO_2$, and a abrasion protective layer made of $Ta_2O_5$. The oxidation protective layer serves to prevent oxidation of the heating resistors, while the abrasion protective layer prevents the head from being worn away with contact with thermal paper. DE-A- 3 435 407 discloses a thermal head of the general type in question, the substrate of which is made of sheet of iron, aluminium, copper or of special steels. No particular alloys of such special steels are mentioned.

As is generally known, when a pulsating voltage is applied between the individual electrodes and the common electrode, a current is supplied to the heating resistors between the electrodes. As a result, the resistors generate Joule heat, whereby the heatsensitive paper pressed onto the abrasion protective layer is printed. The generated Joule heat diffuses not only to the paper side, but also to the substrate side. The heat insulating layer serves to control the conduction and accumulation of the heat. Thus, the heat applied to the heat-sensitive paper can be controlled properly for satisfactory printing. EP-A-177 193 discloses a thermal head of the general type in question, the substrate of which is made of aluminium.

The high electrical resistance substrates of the thermal heads, as described above, are made of ceramic material, and most of them are formed of aluminium oxide with a purity of 90% or more. Steps of manufacturing one such substrate include processes of material treatment, such as removal of alkaline-metal ions, a high-temperature sintering process, and finishing processes, including a polishing process. Thus, the manufacture of the substrate requires complicated processes, and therefore entails high costs.

The ceramic material contains alkaline-metal ions. If the thermal heads are made of this material, the alkaline-metal ions may possibly precipitate in the heating resistors, thereby deteriorating the characteristics of the heating resistors. In order to prevent the alkaline-metal ion separation, the alkaline-metal ions must be previously removed from the material of ceramic powder, to be reduced to a content level below a reference value, e.g., 0,05% or less, by weight, for $Na_2O$.

The prior art substrate is obtained by compressing ceramic powder into a predetermined shape, and then sintering the resulting green sheet at a temperature of about 2,000°C to 2,300°C. Immediately after the sintering, the substrate is subject to bending and/or warping. If it is formed directly into a thermal head, therefore, the head will not be able to have uniform intimate contact with the heat-sensitive paper. Accordingly, the surface of the ceramic substrate is polished in the polishing process to remove its bending and/or warping.

Moreover, the conventional thermal heads of the aforementioned construction can be miniaturized only to a certain extent. Thus, there is a demand for the development of thermal heads of a smaller size and simpler construction.

The object of the present invention is to provide a thermal head which can be manufactured at a low cost, using simple processes, and which exhibits a satisfactory printing capability.

According to the present invention, there is provided a thermal head which comprises a substrate structure, a heating resistor formed on the substrate structure, and an electric conductor formed on the substrate structure and connected electrically to the heating resistor, the substrate structure being made of a ferritic Fe-Cr-alloy which contains approximately 5% to 30% chromium by weight, and an high electrical resistance and heat insulating layer formed on the alloy. In preferred embodiments of the invention, the high electrical resistance and heat insulating layer is composed of glass or heat resistant resin.

According to the invention, moreover, there is provided a thermal head which comprises a substrate structure and connected electrically to the heating resistor, said substrate structure including a substrate and a high electrical resistance and heat insulating layer formed on the substrate and the substrate being made of an ferritic iron alloy containing approximately 5% to 30% chromium by weight and at least one element at a content of approximately 0,05% to 5% by weight, said element being selected from a group of elements including aluminium, silicon, scandium, titanium, yttrium, zirconium, niobium, lanthanum and hafnium.

This invention can be more fully understood from the following detailed description when taken in conjunction with the accompanying drawings, in which:

Fig. 1 is a cutaway perspective view of a thermal head according to an embodiment of the present invention;

Fig. 2 is a sectional view schematically showing a substrate structure shown in Fig. 1;

Fig. 3 is a sectional view schematically showing a substrate structure of a thermal head according to another embodiment of the invention;

Fig. 4 is a sectional view of the substrate structure of Fig. 2 in a bent state; and

Fig. 5 is a cutaway perspective view of a thermal head incorporating the substrate structure shown in Fig. 4.

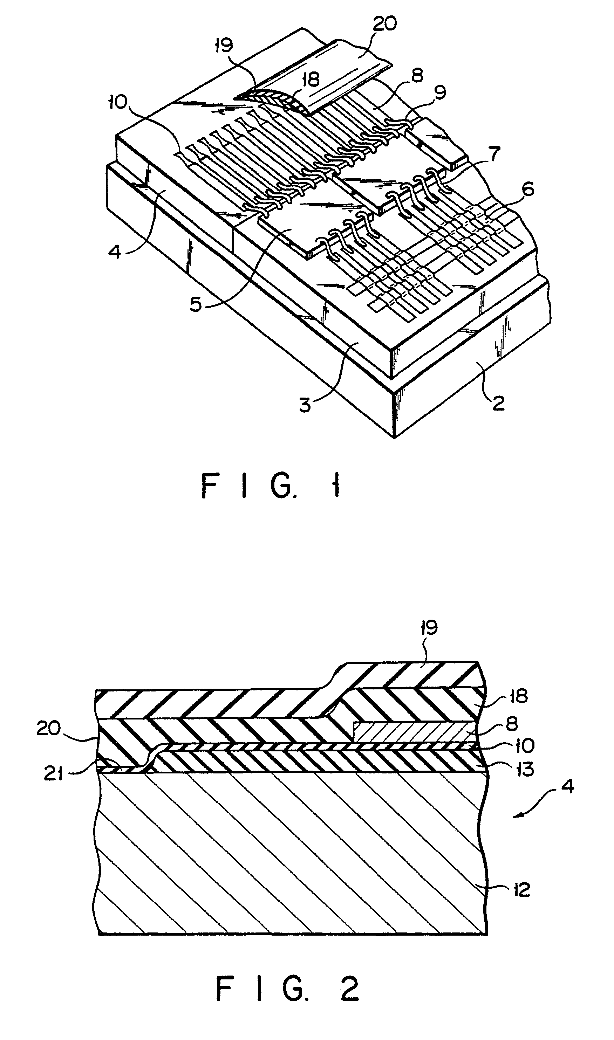

In a thermal head according to an embodiment of the present invention, as shown in Fig. 1, driver-substrate structure 3 and resistor-substrate structure 4 are fixed on aluminum radiation substrate 2 by means of a bonding agent. Structure 3 carries thereon IC units 5 which are used to drive the thermal head. Also, lead patterns 6 of an Aℓ-Si-Cu alloy are formed on structure 3. They are connected electrically to IC units 5 by means of bonding wires 7 so that signal currents are supplied to IC units 5 through patterns 6 and wires 7.

Resistor-substrate structure 4 carries thereon individual lead wires 8 of an Aℓ-Si-Cu alloy, for use as individual electrodes, and heating resistors 10, which are formed in specific patterns. Each lead wire 8, as an individual electrode, has one end connected to each corresponding resistor 10, and the other end connected electrically to IC 5 by means of each corresponding bonding wire 7. Heating resistors 10 are connected electrically to structure 4 for use as a common electrode. Protective layer 20 is formed over structure 4, wires 8, and resistors 10.

In resistor-substrate structure 4 shown in Fig. 1, 30-μm-thick high electrical resistance and heat insulating layer 13 of heat-resistant resin, such as polyimide, is formed on 0.1-mm-thick substrate 12, made of an electrically conductive, ferritic ironchromium alloy, i.e., ferrie Fe-Cr stainless steel, as shown in Fig. 2. This structure is used in place of a conventional single high electrical resistance substrate. Preferred Fe-Cr ferritic stainless steels include SUS-430 (JIS), i.e. Fe-Cr stainless steel containing 16 to 18% chromium by weight, and Fe-Cr-Ti-Al-Si stainless steel (i.e., JIS SUS430 with Ti, Al and Si added) containing 16% to 18% chromium, 0.4% titanium, 0.2% aluminium, and 0.2% silicon, all by weight. To improve the adhension between the alloy substrate 12 and the high electrical resistance and heat insulating layer 13, the oxide layer, which is formed on the alloy substrate 12 during the manufacturing process thereof, must be removed. The alloy substrate 12 is subjected to reduction in a hydrogen atmosphere before the prepolymer solution of polyimid, i.e. polyamic acid, is coated. Unless the oxide layer is removed, the surface of the alloy substrate 12 cannot be oxidized by the oxidizing gas, so as to form a polyimide layer (used as the high electrical resistance and heat insulating layer 13). The polyamic acid is coated by using the screen-printer or rollcoater, etc., and then converted into a polyimide layer through a reaction of dehydration and ring-formation. If an oxide layer is formed on the alloy substrate 12 before the polyimide layer is cured, sufficient bonding cannot take place between the alloy substrate 12 and the high electrical resistance and heat insulating layer 13.

In order to improve its adhesion to high-resistance layer 13 of heat electrical resistant resin, the surface of Fe-Cr alloy substrate 12 may be roughed by honing or the like, before the reduction process in a hydrogen atmosphere, but not to such a degree that the surface condition of substrate 12 is damaged to render a sufficiently strong bonding between substrate 12 and layer 13 impossible. After through holes 21 are bored through high electrical resistance and heat insulting layer 13, the surface of layer 13 is spatter-etched in an Ar atmosphere containing 5% of oxygen by volume. Thereafter, heating resistor layer 10 such as Ta-$SiO_2$ , $Ta_2N$, NiCr, etc., is formed on the treated surface of layer 13 by sputtering. Layer 10 is electrically in contact with substrate 12 through holes 21. Corresponding to the individual heating resistor strips, moreover, individual electrodes 8 are formed on resistor layer 10 and high electrical resistance layer 13. Oxidation protective layer 18, made of $SiO_2$, is formed on layers 13 and 10 and electrodes 8. Abrasion protection layer 19, made of $Ta_2O_5$, is formed on film 18. Thus, the thermal head is completed.

If the layer of polyimide or some other heat-resistant resin is formed, as an electric and heat insulating layer, on the surface of metal substrate 12, the resin or polyimide cures on the substrate at a temperature as low as about 400 to 500° C, for an uncyclized type, and at a temperature of about 200 to 300° C for a cyclized type. Also, polyimide provides a substantial heat-insulating effect, and permits formation of a relatively thin film.

The layer of polyimide or other heat-resistant resin, for use as the electric and heat insulating layer, may be replaced with a glaze layer, which has conventionally been used as a heat insulating layer. When a glaze layer conventionally used as a thermal insulating layer, having a sintering temperature of 1,000 to 1,300° C, is used without modification, the substrate becomes warped when the glaze glass is sintered. If the substrate of the present invention is glazed with a protective glaze layer, therefore, the glaze layer used preferably should have the lowest possible sintering temperature, within an allowable range for heat resistance. For example, glass containing lead borosilicate or zinc borosilicate is preferably used for the glaze layer. A thermal head according to another embodiment of the present invention, using a glaze layer as a heat and electric insulating, will now be described.

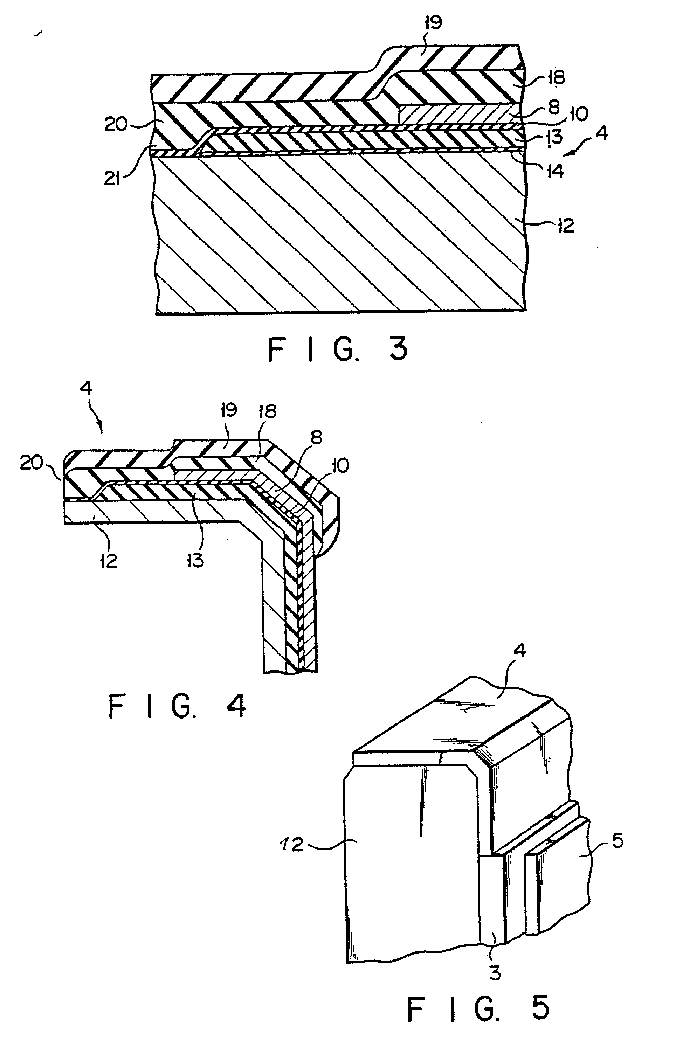

In the thermal head of this embodiment, as shown in Fig. 3, resistor-substrate structure 4 is obtained by forming high electrical resistance and heat insulating layer 13 of 50-$\mu$m thickness on substrate 12 of 0.75-mm thickness. Layer 13 is a glass layer which contains 16% PbO, 56% SiO, 9% $Al_2O_3$, 4% $B_2O_3$, and 8% CaO, all by weight, and additional compounds including BaO, $Cr_2O_3$, and NiO. Substrate 12 is an alloy substrate which is composed of an Fe-Cr alloy and an additive element or elements, including aluminum, silicon, scandium, titanium, vanadium, yttrium, zirconium, niobium, lanthanum, and/or hafnium, especially aluminum, titanium, zirconium, and hafnium. For example, the substrate may be formed of Fe-Cr-Aℓ-Ti stainless steel of which chromium, titanium and aluminum contents are 18%, 0.2%, and 4%, by weight, respectively. In order to improve the adhesion between the surface of alloy substrate 12 and high electrical resistance and heat insulating glaze layer 13, oxide layer 14 composed of the same constituents of substrate 12, e.g., tight oxide layer 22 of $Al_2O_3$ and Aℓ $Ti_2O_3$, is formed on the interface between the substrate surface and layer 13. The oxide layer thus formed indeed increases the adhesion between alloy substrate 12 and glaze layer 13. This is because the oxide in the surface region of substrate 12 melts into the glass as it contacts hot glaze glass layer 13 being formed, while the glaze glass melts into the oxide, whereby an intermediate glass-oxide layer is formed. Aluminum, silicon, titanium, vanadium, zirconium, and the like can easily be distributed into both a glass layer and an alloy substrate. When the surface region of substrate 12 made of a Fe-Cr alloy is oxidized at 1150 to 1250° C for 30 to 60 minutes in a wet hydrogen atmosphere having a dew point of 25 to 30° C, an oxide layer is formed, which contains oxides, such as $Al_2O_3$, $SiO_2$ and TiO, all able to readily melt into glass to achieve a strong adhesion between substrate 12 and layer 13. According to most of results of various experiments, the bonding between a glass layer and a metal substrate can be enhanced by forming a spinel-type oxide layer on the substrate, thereby producing a reaction layer between the oxide layer and the glass layer. Instead of forming an oxide layer, the surface of alloy substrate 12 can be roughed by a mechanical means such as honing. If this is the case, the surface of substrate 12 should not be roughed to so great a degree as to make a uniform contact between the head and a sheet of heat-sensitive paper impossible. Heating resistor layer 10 and individual electrodes 8 are formed on the substrate structure, in the same manner as aforesaid. Then, oxidation inhibitor layer 18 and abrasion protective layer 19 are formed over layer 10 and electrodes 8. Thus, the thermal head is completed.

In the thermal head according to the present invention, as described above, no ceramic substrate is used in substrate structure 4. Accordingly, the processes for manufacturing the thermal head do not include a process for removing alkaline-metal ions from the ceramic material. Also, there is no need of a process for removing bending and/or warping which may otherwise be caused while the ceramic substrate is being sintered. Thus, the manufacturing processes for the thermal head of the invention are simpler, and cost loss than the prior art manufacturing processes.

Moreover, the substrate structure of the thermal head, according to the present invention, includes a substrate of a good electric conductor, such as an Fe-Cr or Fe-Cr-Aℓ-Ti alloy, so that the alloy substrate itself can serve as a common electrode. Thus, the thermal head can be small-sized and simple in construction. Made of metal, furthermore, substrate structure 4 can be bent, which has as shown in Fig. 2, a thermal insulating layer made of polyamide resin or the like. After the substrate structure is completed, as shown in Fig. 2, it is bent into an L, as shown in Fig. 4. Then, the structure is fitted on the corner of heat-radiation substrate 12, as shown in Fig. 5. Thus, the thermal head of a vertical type is assembled. In Figs. 1 to 5, like reference numerals refer to like portions throughout the drawings.

The inventors hereof selected the Fe-Cr alloy as the material of the substrate of the high-resistance substrate structure for the following reasons.

First, the Fe-Cr ferritic stainless steel has a coefficient of thermal expansion of about 10 × $10^{-6}$ $K^{-1}$, as compared with about 7 × $10^{-6}$ $K^{-1}$ for the conventional substrate material or $Al_2O_3$. These two figures are approximate to each other. Accordingly, the same materials of the heating resistors, oxidation protective film, and abrasion protective film for the prior art thermal heads can be used directly for the thermal head of the invention.

Secondly, the Fe-Cr stainless steel of this type has a thermal conductivity of about 25 W/m$^{-1}$. $K^{-1}$, which is approximate to about 20 W/m. k for the conventional substrate material or $Al_2O_3$. Also in this respect, the materials for the prior art thermal heads can be utilized for the thermal head of the invention.

Thirdly, substrates of thermal heads, in general, are heated continuously to 200 to 300° C, and instantaneously to a high temperature of 400 to 500°C. Naturally, they must stand such severe temperature conditions, both thermally and mechanically. The Fe-Cr ferritic stainless steel can meet this requirement.

Fourthly, the substrates are attached by various dry etching gases and chemical etching solutions, during the manufacture of the thermal heads, so that they must be resistant to corrosion. This requirement can be satisfied by an Fe-Cr alloy, especially by one having a chromium content of about 5 to 30% by weight, preferably about 8 to 20%.

Fifthly, stainless steel, like other metal materials for substrates, can be straightened if it becomes warped.

Fe-Cr-Ni austenitic stainless steel may possibly be used as an alloy having the aforementioned characteristics. However, its coefficient of thermal expansion is about $17 \times 10^{-6}$ $K^{-1}$, and it is too high. Nevertheless, there will be no problem as long as the content ratio of the third element(s) added to the Fe-Cr alloy is within a range such that the body-centered cubic structure (bcc structure) of the ferritic stainless steel cannot be changed into the face-centered cubic structure (fcc structure) of the austenitic stainless steel.

The following are the reasons why the inventors hereof used the alloy composed of an Fe-Cr alloy and at least one additive element selected among a group of elements including aluminum, silicon, scandium, titanium, vanadium, yttrium, zirconium, niobium, lanthanum, and hafnium, instead of using a mere Fe-Cr alloy.

First, when using a metal substrate for the thermal head, a high electrical resistance, heat insulating layer must be formed over the surface of the substrate. If the material of the substrate is a mere Fe-Cr alloy, the contact between the substrate and the glaze glass layer often cannot be fully intimate. If any of the aforesaid elements is added to the Fe-Cr alloy, thereby forming an oxide layer, especially a spinel-type oxide layer composed of the oxide of the same constituent elements of the metal substrate, on the surface of the substrate, then the adhesion is improved considerably.

Secondly, the metal substrate for the thermal head must be resistant to corrosion because it should be attached by various corrosive gases for dry etching, as well as chemical etching solutions, during the manufacture of the thermal head, and may also be used actually at high temperature and humidity. The corrosion resistance of the metal substrate can be improved by adding aluminum, silicon, scandium, titanium, vanadium, yttrium, zirconium, niobium, lanthanum, and/or hafnium, especially aluminum, titanium, zirconium, and hafnium, to the Fe-Cr alloy.

Thirdly, the Fe-Cr alloy was selected as the material for the metal substrate for the following reasons. Namely, it is Fe-Cr ferritic stainless steel of the bcc (body centered cubic) structure, which has a thermal expansion coefficient of about $10 \times 10^{-6}$ $K^{-1}$, as compared with about $7 \times 10^{-6}$ $K^{-1}$ for the conventional substrate material or $Al_2O_3$, so that the conventional materials of the heating resistors, oxidation protective layer, and abrasion protective layer can be used directly for the thermal head of the invention. Also, austenitic stainless steel of the fcc (face centered cubic) structure has a thermal expansion coefficient as high as about $17 \times 10^{-6}$ $K^{-1}$. The addition of aluminum, silicon, scandium, titanium, vanadium, yttrium, zirconium, niobium, lanthanum, and/or hafnium can stabilize the ferrite phase of the bcc structure, and prevents austenitization.

The Fe-Cr alloy can be fully improved in corrosion resistance only if it has a chromium content of about 5 to 30% by weight, preferably about 8 to 20%.

The content of additive element or elements, including aluminum, silicon, scandium, titanium, vanadium, yttrium, zirconium, niobium, lanthanum, and/or hafnium, is limited within a range from about 0.05% to 5% by weight, for the following reasons. If the content is less than 0.05% by weight, the aforementioned effects cannot be expected. If the content exceeds 5% by weight, on the other hand, the third element(s) may possibly change the crystal structure into an austenitic fcc structure. In such a case, moreover, the workability of thin sheet is lowered considerably, thus entailing poor economy.

The oxide layer can be used as a high electrical resistance and heat insulating layer by suitably selecting the amount of addition of the third element(s) and the thickness of the oxide layer.

Insulated substrates were prepared experimentally in which a polyimide layer of 30-μm thickness is formed on an Fe-Cr alloy containing 16% chromium by weight. Thereupon, it was found that the substrate structure of the present invention can be manufactured at about one-fourth to one-eighth the cost of the prior art substrate structures. Moreover, thermal heads were assembled in the manner shown in Fig. 1, and were subjected to a normal test using $1 \times 10^8$ pulses, without presenting any problems in their characteristics.

**Claims**

1. A thermal head comprising:
   a substrate structure (4);

a heating resistor (10) formed on the substrate structure (4) and
an electric conductor (8) formed on the substrate structure (4) and connected electrically to the heating resistor (10), said substrate structure (4) being made of a ferritic Fe-Cr-alloy which contains approximately 5% to 30% chromium by weight, and an high electrical resistance and heat insulating layer (13) formed on the alloy.

2. The thermal head according to claim 1, characterized in that said high electrical resistance and heat insulating layer (13) is composed of glass.

3. The thermal head according to claim 1, characterized in that said high electrical resistance and heat insulating layer (13) is composed of heat-resistant resin.

4. The thermal head according to claim 1, characterized in that said alloy is formed with an oxide layer composed of the same constituent elements thereof, and the high electrical resistance and heat insulating layer (13) of glass is formed on the oxide layer (14).

5. A thermal head comprising:
a substrate structure (4);
a heating resistor (10) formed on the substrate structure (4); and an electric conductor (8) formed on the substrate structure (4) and connected electrically to the heating resistor (10), said substrate structure (4) including a substrate (12) and a high electrical resistance and heat insulating layer (14) formed on the substrate (12) and the substrate (12) being made of an ferritic iron alloy containing approximately 5% to 30% chromium by weight and at least one element at a content of approximately 0,05% to 5% by weight, said element being selected from a group of elements including aluminium, silicon, scandium, titanium, yttrium, zirconium, niobium, lanthanum and hafnium.

6. The thermal head according to claim 5, characterized in that the high electrical resistance and heat insulating layer (14) is an oxide layer being composed of the same constituents as said substrate (12).

7. The thermal head according to claim 6, characterized in that said oxide layer (14) is an oxide of spinel.

8. The thermal head according to claim 5, characterized in that the thickness of said substrate structure (4) ranges substantially from 0,03 mm to 1 mm

9. The thermal head according to claim 5, characterized in that the high electrical resistance and heat insulating layer (14) is formed on the alloy of the substrate (12) so that the heating resistor (10) and an electric conductor (8) connected electrically to the heating resistor (10) are formed on said high electrical resistance and heat insulating layer (14).

10. The thermal head according to claim 9, characterized in that said high electrical resistance and heat insulating layer (14) is a glass layer.

11. The thermal head according to claim 10, characterized in that said glass layer (14) is composed of crystallized glass.

12. The thermal head according to claim 9, characterized in that said high electrical resistance and heat insulating layer (14) is a heat-resistant resin layer.

**Revendications**

1. Tête thermique comprenant :
une structure de substrat (4) ;
une résistance chauffante (10) formée sur la structure de substrat (4) ; et
un conducteur électrique (8) formé sur la structure du substrat (4) et connecté électriquement à la résistance chauffante (10), la structure de substrat (4) étant réalisée en un alliage Fe-Cr ferritique qui contient approximativement de 5% à 30% de chrome par unité de poids et une couche thermiquement isolante de résistance électrique élevée (13) formée sur l'alliage.

2. Tête thermique selon la revendication 1, caractérisée en ce que la couche thermiquement isolante de résistance électrique élevée (13) est composée de verre.

3. Tête thermique selon la revendication 1, caractérisée en ce que la couche thermiquement isolante de résistance électrique élevée (13) est composée d'une résine résistante à la chaleur.

4. Tête thermique selon la revendication 1, caractérisée en ce que l'alliage est formé avec une couche d'oxyde composée des mêmes éléments constituants que celui-ci et en ce que la couche thermiquement isolante de résistance électrique élevée (13) en verre est formée sur la couche en oxyde (14).

5.  Tête thermique comprenant :
    une structure de substrat (4) ;
    une résistance chauffante (10) formée sur la structure de substrat (4) et un conducteur électrique (8) formé sur la structure de substrat (4) et connecté électriquement à la résistance chauffante (10), la structure de substrat (4) incluant un substrat (12) et une couche thermiquement isolante de résistance électrique élevée (14) formée sur le substrat (12) et le substrat (12) étant réalisé en un alliage de fer ferritique qui contient approximativement de 5% à 30% de chrome par unité de poids et au moins un élément selon une teneur d'approximativement 0,05% à 5% par unité de poids, l'élément étant sélectionné parmi un groupe d'éléments comprenant l'aluminium, le silicium, le scandium, le titane, l'yttrium, le zirconium, le niobium, le lanthane et l'hafnium.

6.  Tête thermique selon la revendication 5, caractérisée en ce que la couche thermiquement isolante de résistance électrique élevée (14) est une couche en oxyde qui est composée des mêmes constituants que le substrat (12).

7.  Tête thermique selon la revendication 6, caractérisée en ce que la couche en oxyde (14) est un oxyde de spinelle.

8.  Tête thermique selon la revendication 5, caractérisée en ce que l'épaisseur de la structure de substrat (4) s'inscrit dans une fourchette qui va sensiblement de 0,03 mm à 1 mm.

9.  Tête thermique selon la revendication 5, caractérisée en ce que la couche thermiquement isolante de résistance électrique élevée (14) est formée sur l'alliage du substrat (12) de telle sorte que la résistance chauffante (10) et que le conducteur électrique (8) connecté électriquement à la résistance chauffante (10) soient formés sur la couche thermiquement isolante de résistance électrique élevée (14).

10. Tête thermique selon la revendication 9, caractérisée en ce que la couche thermiquement isolante de résistance électrique élevée (14) est une couche en verre.

11. Tête thermique selon la revendication 10, caractérisée en ce que la couche en verre (14) est composée de verre en cristaux.

12. Tête thermique selon la revendication 9, caractérisée en ce que la couche thermiquement isolante de résistance électrique élevée (14) est une couche en résine résistante à la chaleur.

**Ansprüche**

1.  Wärmekopf bzw. Thermokopf, umfassend:
    ein Substratgebilde (4),
    einen auf dem Substratgebilde (4) geformten Heizwiderstand (10) und
    einen auf dem Substratgebilde (4) geformten und elektrisch mit dem Heizwiderstand (10) verbundenen elektrischen Leiter (8), wobei das Substratgebilde (4) aus einer ferritischen Fe-Cr-Legierung mit etwa 5 - 30 Gew.-% Chrom hergestellt ist, sowie eine auf der Legierung geformte, einen hohen elektrischen Widerstand aufweisende Wärmeisolierschicht (13).

2.  Wärmekopf nach Anspruch 1, dadurch gekennzeichnet, daß die einen hohen elektrischen Widerstand aufweisende Wärmeisolierschicht (13) aus Glas besteht.

3.  Wärmekopf nach Anspruch 1, dadurch gekennzeichnet, daß die einen hohen elektrischen Widerstand aufweisende Wärmeisolierschicht (13) aus einem wärmebeständigen Harz besteht.

4.  Wärmekopf nach Anspruch 1, dadurch gekennzeichnet, daß die Legierung mit einer Oxidschicht, die aus den gleichen Bestandteilselementen derselben besteht, versehen ist und die einen hohen elektrischen Widerstand aufweisende Wärmeisolierschicht (13) aus Glas auf der Oxidschicht (14) ausgebildet ist.

5.  Wärmekopf, umfassend:
    ein Substratgebilde (4),
    einen auf dem Substratgebilde (4) geformten Heizwiderstand (10) und
    einen auf dem Substratgebilde (4) geformten und elektrisch mit dem Heizwiderstand (10) verbundenen elektrischen Leiter (8), wobei das Substratgebilde (4) ein Substrat (12) und eine auf diesem geformte, einen hohen elektrischen Widerstand aufweisende Wärmeisolierschicht (14) aufweist und das Substrat (12) aus einer ferritischen Eisenlegierung mit etwa 5 - 30 Gew.-% Chrom und einem Gehalt von etwa 0,05 - 5 Gew.-% an mindestens einem Element, ausgewählt aus einer Gruppe umfassend Aluminium, Silizium, Scandium, Titan, Yttrium, Zirkon, Niob, Lanthan und Hafnium, hergestellt ist.

6. Wärmekopf nach Anspruch 5, dadurch gekennzeichnet, daß die einen hohen elektrischen Widerstand aufweisende Wärmeisolierschicht (14) eine Oxidschicht aus den gleichen Bestandteilen wie das Substrat (12) ist.

7. Wärmekopf nach Anspruch 6, dadurch gekennzeichnet, daß die Oxidschicht (14) aus einem Oxid von Spinell besteht.

8. Wärmekopf nach Anspruch 5, dadurch gekennzeichnet, daß die Dicke des Substratgebildes (4) im wesentlichen im Bereich von 0,03 - 1 mm liegt.

9. Wärmekopf nach Anspruch 5, dadurch gekennzeichnet, daß die einen hohen elektrischen Widerstand aufweisende Wärmeisolierschicht (14) auf der Legierung des Substrats (12) so geformt ist, daß der Heizwiderstand (10) und ein mit dem Heizwiderstand (10) elektrisch verbundener elektrischer Leiter (8) auf der einen hohen elektrischen Widerstand aufweisenden Wärmeisolierschicht (14) ausgebildet sind.

10. Wärmekopf nach Anspruch 9, dadurch gekennzeichnet, daß die einen hohen elektrischen Widerstand aufweisende Wärmeisolierschicht (14) eine Glasschicht ist.

11. Wärmekopf nach Anspruch 10, dadurch gekennzeichnet, daß die Glasschicht (14) aus kristallisiertem Glas besteht.

12. Wärmekopf nach Anspruch 9, dadurch gekennzeichnet, daß die einen hohen elektrischen Widerstand aufweisende Wärmeisolierschicht (14) eine wärmebeständige Harzschicht ist.

F I G. 1

F I G. 2

F I G. 3

F I G. 4

F I G. 5